# EUROPÄISCHE PATENTSCHRIFT

(11) **EP 1 924 112 B1**
(45) Veröffentlichungstag und Bekanntmachung des Hinweises auf die Patenterteilung: **28.08.2013**
(21) Anmeldenummer: 06124044.6
(22) Anmeldetag: 14.11.2006
(51) Int. Cl.: H04W 28/06

(54) **Verfahren, System und Einrichtung zur Ausführung einer Anmeldeprozedur eines mobilen Endgerätes in ein Mobilfunknetz**
Method, system and apparatus for performing registration procedure of a mobile terminal in a mobile communication network
Méthode, système et dispositif pour effectuer une procédure d'enregistrement d'un terminal mobile dans un réseau de communications radio

(43) Veröffentlichungstag der Anmeldung: 21.05.2008
(73) Patentinhaber: Siemens Convergence Creators GmbH & Co. KG, 21079 Hamburg (DE)
(72) Erfinder: Dorn, Aleksej, 21075 Hamburg (DE); Brenner, Jörg, 22303 Hamburg (DE); Beckmann, Steffen, 21614 Buxtehude (DE); Cramer, Carl Mathias, 24558 Henstedt-Ulzburg (DE); Wolff, Florian, 22459 Hamburg (DE)
(74) Vertreter: Peham, Alois

(56) Entgegenhaltungen:
- WO-A-01/63775
- US-A1- 2004 024 791

## Beschreibung

### Technisches Gebiet

Die Erfindung betrifft ein Verfahren zur Ausführung einer Anmeldeprozedur eines mobilen Endgerätes in ein Mobilfunknetz, sowie ein System zur Durchführung des Verfahrens und eine Einrichtung zum Einsatz in diesem Verfahren.

### Stand der Technik

Moderne zellulare digitale Mobilfunknetze haben die Mobilkommunikation seit Beginn der 1990er Jahre revolutioniert. Sie haben die bestehenden analogen Mobilfunknetze praktisch vollständig abgelöst. Die modernen Standards (besonders GSM, UMTS, CDMA) ermöglichten einen Verfall der Infrastruktur- und Endgerätepreise was zu Wettbewerb unter den Telephonieanbietern und zu niedrigen Gebühren geführt hat.

Der Wettbewerb der Infrastruktur herstellenden Firmen wurde auch dadurch gefördert, daß die Kommunikation zwischen den Netzelementen standardisiert wurde, die Schnittstellenbeschreibungen und Protokolle offengelegt wurden und deshalb Mobilfunknetze der obengenannten Standards aus Netzelementen beliebiger Hersteller zusammengestellt werden können. Allen Mobilfunknetzen ist gemein, daß sie aus Elementen der Funkversorgung (Antennen, Basisstationen (im Falle von GSM "BTS" - Base Transceiver Station genannt), Steuerungseinheiten (im Falle von GSM "BSC"- Base Station Controller genannt)) und aus Elementen der Vermittlungstechnik (im Falle von GSM "MSC" - Mobile Switching Center genannt) bestehen. Daneben existieren verschiedene weitere Netzelement für diverse Aufgaben, wie die Anbindung an das öffentliche Telephonsystem (PSTN), die Nutzerverwaltung und ähnliches.

Bei der Entwicklung dieser Standards wurde auf die Versorgung des urbanen und ruralen Raums fokussiert, die Zellengrößen und Schnittstellen wurden auf dafür typische Entfernungen und Nutzerdichten abgestimmt.

Besteht nun der Wunsch nach Mobilkommunikation in von konventioneller Infrastruktur abgeschnittenen Bereichen wie z.B. entfernt gelegenen Inseln, Siedlungen, Flugzeugen und Schiffen, so bietet sich an ein komplettes Mobilfunksystem an diesen Orten aufzubauen und beispielsweise über Telephonkabel, Richtfunkstecken oder Satellitenfunkstrecken an das öffentliche Telephonsystem anzubinden. Dies ist jedoch mit sehr hohen Kosten verbunden. Im Fall des Einsatzes im einem Flugzeug stellt auch das hohe Gewicht dieser Einrichtungen ein Problem dar.

Werden stattdessen nur die unbedingt nötigen Netzelemente (Endgeräte, Basisstation) an diese entfernten Orte gebracht und die Anbindung an das restliche Mobilfunksystem über ein Übertragungssystem geführt, so können bei hoher Verzögerungszeit dieses Übertragungssystems (z.B. bei Einsatz einer Satellitenfunkstrecke) die Signalisierungsbemühungen zwischen dem Endgerät und dem Mobilfunknetz die zum Anmelden an das Netz, aber auch zum Aufbau einer Verbindung, dem Absenden einer SMS (Short Message Service) oder einem Location Update nötig sind, scheitern.

Diese Anmeldeprozeduren basieren darauf, dass vom mobilen Endgerät Nachrichten, worin eine Anfragereferenz enthalten ist, an das Mobilfunknetz gesendet werden. Das Mobilfunknetz sendet daraufhin entsprechende Antwortnachrichten an das anfragende mobile Endgerät. In diesen Nachrichten sind die vom mobilen Endgerät vorher ausgesendeten Anfragereferenzen enthalten und ermöglichen so dem mobilen Endgerät eine eindeutige Zuordnung der Antwortnachricht. Die vom mobilen Endgerät ausgesendeten Anfragereferenzen bleiben aber nur für einen bestimmten Zeitraum gültig, erfolgt eine Antwortnachricht an das mobile Endgerät (z.B. durch Zeitverzögerungen innerhalb des Mobilfunknetzes) nach Ablauf dieser Zeit, so wird die Antwortnachricht als ungültig verworfen und das mobile Endgerät beginnt von neuem mit dem Ausführen einer Anmeldeprozedur. Ist bei diesem oder weiteren Anmeldeversuchen die Zeitverzögerung weiterhin vorhanden, so kann sich das mobile Endgerät nicht an dieses Mobilfunknetz anmelden.

Bekannte Lösungen für diese Problematik sind einerseits das sorgfältige Optimieren der Netzwerkkonfiguration (im Beispiel von GSM das Einstellen der sogenannten Zellenparameter "max Retrans" und "Tx Integer") was aber auch nur bis zu einer maximalen Signallaufzeit Abhilfe schaffen kann und der Aufbau des Mobilfunknetzes in einer Art das alle in die Anmeldeprozedur involvierten Netzelemente nahe dem anfragenden mobilen Endgerät aufgestellt werden und erst eine weitere Schnittstelle, welche die Anmeldeprozedur nicht mehr beeinflussen kann (im Beispiel von GSM die sogenannte Schnittstelle "A") über das Übertragungssystem mit hoher Zeitverzögerung geführt wird. Letztere Lösung bedingt die bereits angeführten Nachteile bezüglich höherer Kosten und höheren Gewichts.

Im folgenden sei beispielhaft die Signalisierung der Anmeldeprozedur gemäß dem Standard "GSM TS 04.08 Kapitel 3.3.1.1.2 (Version 7.21.0 Release 1998)" beschrieben. Der Algorithmus dieser Anmeldeprozedur basiert auf der wiederholten Aussendung von Signalisierungswünschen CHAN RQD auf dem sogenannten Random Access Channel RACH in Richtung BTS. Jede CHAN RQD Nachricht wird dabei vom mobilen Endgerät (MS) mit einer "Request Reference (Ref.1)" versehen. Das Mobilfunknetz (bzw. der Base Station Controller BSC) reagiert auf diese Nachricht durch das Senden von CHAN ACT mit dem Aufbau des zukünftigen Signalisierungskanals und sendet daraufhin auf dem Access Grant Channel AGCH eine sogennante "Immediate Assignment Nachricht" IMM ASSIGNMENT an das mobile Endgerät. Diese IMM ASSIGNMENT Nachricht beinhaltet die vom mobilen Endgerät verwendete Ref.1 und kann daher vom MS zugeordnet werden. Da die Übertragung der CHAN RQD Nachricht unabgestimmt mit anderen, ebenfalls einen Signalisierungswunsch anzeigenden mobilen Endgeräten erfolgt, kann diese Nachricht auf der Luftschnittstelle verloren gehen. Daher wiederholt das mobile Endgerät die Aussendung der CHAN RQD Nachricht nach einer festgelegten Zeit (welche sich abhängig von der Zellenkonfiguration S und dem von der BTS ausgestrahlten Wert Tx-Integer ergibt). Bei jeder wiederholten Aussendung verwendet das mobile Endgerät eine neue Referenz (Ref.n) - und merkt sich dabei nur die letzten drei Referenzen (Ref.n-2, Ref.n-1, Ref.n). Nach der Aussendung der letzten Wiederholung der CHAN RQD Nachricht (wird durch den von der BTS ausgestrahlten Wert Max Retrans) startet das mobile Endgerät den Timer T3126 und wartet auf das Eintreffen einer zu den letzten drei Aussendungen passenden IMM ASSIGNMENT Nachricht. Läuft dieser Timer ab, so bricht das mobile Endgerät die Assignment Procedure mit dem Netz ab. Die Konsequenz ist, dass ein Einbuchen des Mobiles, ein Gesprächsaufbau oder das Versenden einer SMS scheitert.

### Darstellung der Erfindung

Der Erfindung liegt die Aufgabe zugrunde auch im Fall hoher Verzögerungszeit auf der Schnittstelle zwischen der Basisstation und der Steuerungseinheit eine Anmeldeprozedur eines mobilen Endgerätes durchzuführen.

Die Aufgabe wird durch ein Verfahren mit den Merkmalen des Anspruchs 1, einem System gemäß Anspruch 8 und einer Einrichtung gemäß Anspruch 9 gelöst. Vorteilhafte Ausgestaltungen sind Gegenstand von abhängigen Ansprüchen.

Dem Grundgedanken der Erfindung zufolge erfüllt die in die Verbindung von der Basisstation zur Steuerungseinheit liegende Einrichtung die Aufgabe dadurch, dass sie
- die vom mobilen Endgerät während jeder Initiierung einer Anmeldeprozedur ausgesendete Anfragereferenz speichert und
- diese gespeicherte Anfragereferenz in eine von der Steuerungseinheit gesendete Antwortnachricht derart einfügt, dass sie die darin enthaltene Anfragereferenz durch die aktuell in dieser Einrichtung gespeicherte Anfragereferenz ersetzt.

Dadurch erfährt das mobile Endgerät die gleiche Antwort vom Mobilfunknetz wie im Falle einer fehlenden Zeitverzögerung.

Dadurch ist der Vorteil erzielbar, dass das mobile Endgerät auch bei Zeitverzögerungen die ansonst den Anmeldevorgang unmöglich machen den Anmeldevorgang durchführen kann.

Eine vorteilhafte Ausgestaltung der Erfindung sieht vor, die Funktion in einem in die Schnittstelle zwischen Basisstation und Steuerungseinheit eingefügten Netzelement umzusetzen. Dadurch kann ein bestehendes Mobilfunknetz verbessert werden ohne bereits bestehende Netzelemente verändern zu müssen. In weiterer günstiger Ausgestaltung der Erfindung empfiehlt sich, die Funktion in die Basisstation zu integrieren. Dadurch kann ein Netzelement so verändert werden daß es die erfindungsgemäße Funktionalität besitzt.

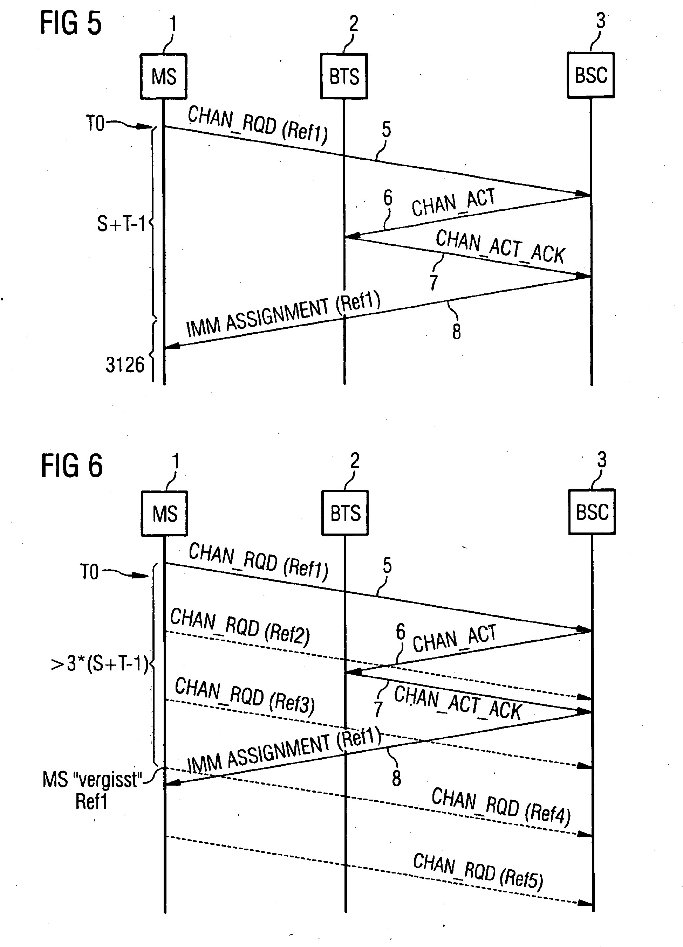

Im Falle dass das Mobilfunknetz ein GSM Netz ist wird die Aufgabe wie folgt gelöst.
Der Hauptaspekt des hier beschriebenen Verfahrens ist, das die von dem mobilen Endgerät (MS) ausgesendeten CHAN RQD Nachrichten von einem zwischen BTS und der Übertragungsstrecke mit langer Signallaufzeit (z.B. Satellitenfunkstrecke) befindlichen Netzelement gefiltert und die in den Nachrichten enthaltene "Request Reference" gespeichert werden. Trifft nun (mit durch den Kanal bedingter Verzögerung) eine IMM ASSIGNMENT Nachricht von der BSC bei diesem Netzelement ein, so wird die in der Nachricht enthaltene "Request Reference" durch die zuletzt in einer CHAN RQD empfangene "Request Reference" ersetzt und über die BTS ausgesendet. Als Konsequenz empfängt das mobile Endgerät eine Netzantwort vor dem "Vergessen" der "Request Reference" resp. vor Ablauf des Timers 3126. Dadurch erfährt das mobile Endgerät die gleiche Antwort vom Mobilfunknetz wie im in Fig.5 beschriebenen Gutfall.

### Kurzbeschreibung der Zeichnungen

**Fig.1** zeigt die Darstellung des prinzipiellen Aufbaus eines zellularen Mobilfunknetzes. Dargestellt sind die wesentlichen, von dieser Erfindung berührten Netzelemente mobiles Endgerät 1, Basisstation B und Steuerungseinheit S und eine Vermittlungseinheit V. Konkrete, im Einsatz befindliche Mobilfunknetze besitzen noch weitere, für diese Erfindung unerhebliche Netzelemente und sind an das öffentliche Telephonnetz (PSTN) angebunden.

**Fig.2** zeigt die Darstellung des prinzipiellen Aufbaus eines zellularen Mobilfunknetzes im Falle der besonders ausgeprägten räumlichen Trennung der Netzelemente Basisstation B und Steuerungseinheit S, z.B. bei einem Einsatz in einem Flugzeug. Der umrahmte Teil stellt die abgesetzt im Einsatz befindlichen Netzelemente dar. Die Schnittstelle zwischen diesen beiden Netzelementen wird in diesem Fall über einen Kanal mit hoher Zeitverzögerung 13, z.B. über eine Satellitenfunkstrecke geführt.

**Fig. 3** zeigt die Darstellung einer erfindungsgemäßen Umsetzung nach Anspruch 2. Die der Erfindung zugrundeliegende Funktion ist in einem eigenen Netzelement realisiert.

**Fig. 4** zeigt die Darstellung einer erfindungsgemäßen Umsetzung nach Anspruch 3. Die der Erfindung zugrundeliegende Funktion ist in die Basisstation integriert.

**Fig. 5** zeigt am Beispiel des im GSM Standard definierten Verfahrens den Verlauf der Signalisierungsinformationen die zwischen den Netzelementen mobiles Endgerät MS, BTS und BSC beim Ablauf einer erfolgreichen "Immediate Assignment Procedure" ausgetauscht werden (Gutfall).

**Fig. 6** zeigt am Beispiel des im GSM Standard definierten Verfahrens den Verlauf der Signalisierungsinformationen die zwischen den Netzelementen mobiles Endgerät MS, BTS und BSC beim Ablauf einer misslungenen "Immediate Assignment Procedure" ausgetauscht werden (Schlechtfall).

**Fig. 7** zeigt am Beispiel des im GSM Standard definierten Verfahrens den Verlauf der Signalisierungsinformationen die zwischen den Netzelementen mobiles Endgerät MS, BTS und BSC im Fall einer erfindungsgemäßen Umsetzung.

### Ausführung der Erfindung

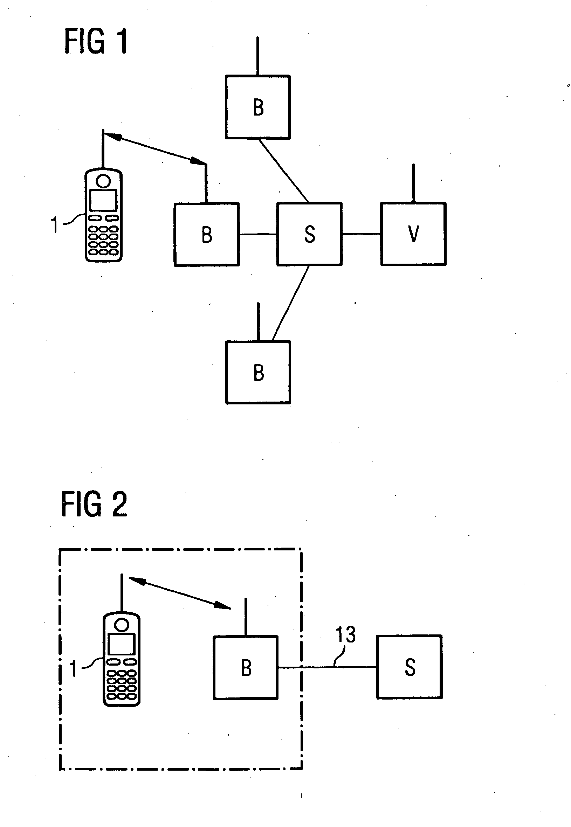

Fig.1 zeigt die Darstellung des prinzipiellen Aufbaus eines zellularen Mobilfunknetzes. Dargestellt ist ein mobiles Endgerät 1 welches mit einer Basisstation B über eine Funkstrecke verbunden ist. Eine Steuerungseinheit S ist in dieser Darstellung gleichzeitig mit 3 Basisstationen verbunden. Eine Vermittlungseinheit V stellt die Verbindung zum öffentlichen Telephonsystem (hier nicht dargestellt) her.

Fig.2 zeigt die Darstellung des prinzipiellen Aufbaus eines zellularen Mobilfunknetzes im Falle der besonders ausgeprägten räumlichen Trennung der Netzelemente Basisstation B und Steuerungseinheit S, z.B. bei einem Einsatz in einem Flugzeug. Der umrahmte Teil stellt die abgesetzt im Einsatz befindlichen Netzelemente dar. Die Schnittstelle zwischen diesen beiden Netzelementen wird in diesem Fall über einen Kanal mit hoher Zeitverzögerung 13, z.B. über eine Satellitenfunkstrecke geführt.

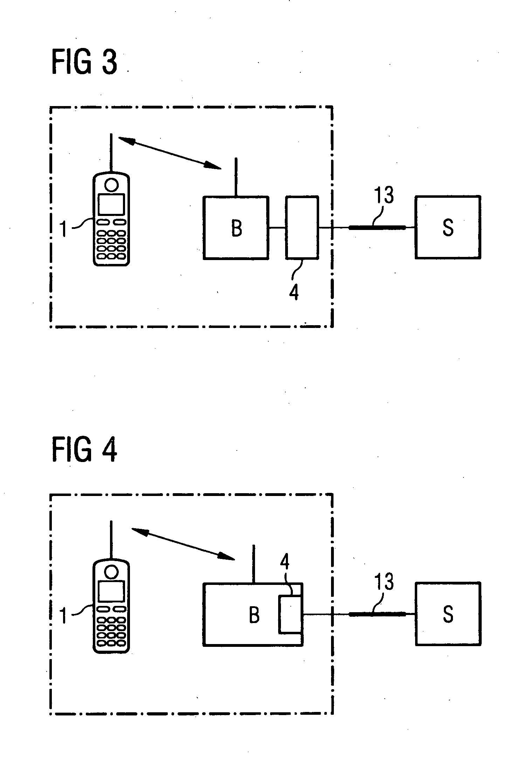

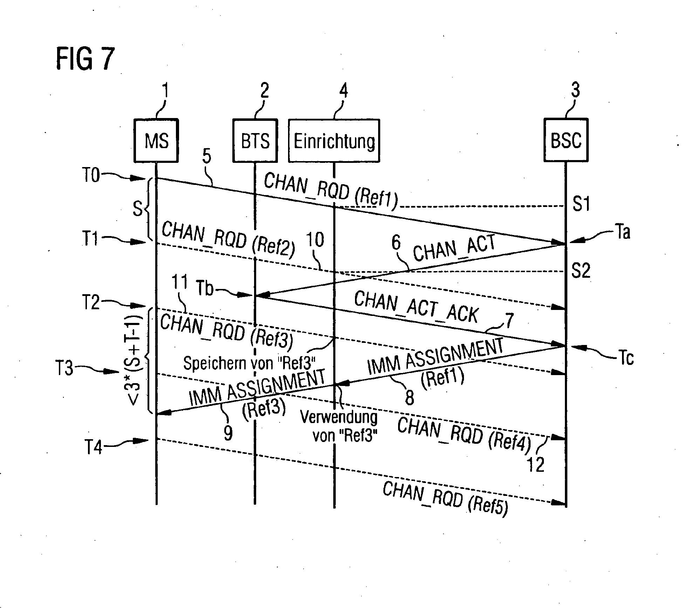

In Fig.3 ist schematisch der Aufbau eines Mobilfunknetzes bei erfindungsgemäßer Anordnung der der Erfindung zugrundeliegenden Einrichtung dargestellt. Die Basisstation B (welche im Falle, dass das Mobilfunknetz ein GSM Netz ist Base Transceiver Station BTS benannt wird und so im Signalisierungsablauf in Fig. 7 dargestellt ist) ist mit der Steuerungseinheit S (welche im Falle, dass das Mobilfunknetz ein GSM Netz ist Base Station Controller BSC benannt wird und so im Signalisierungsablauf in Fig. 7 dargestellt ist) verbunden. Im Verlauf dieser Verbindung liegen die erfindungsgemäße Einrichtung 4 und der Übertragungskanal mit hoher Signallaufzeit 13. Es ist wesentlich, dass die erfindungsgemäße Einrichtung 4 zwischen der Basisstation B und dem Übertragungskanal mit hoher Signallaufzeit 13 angeordnet ist.

In Fig.4 ist die erfindungsgemäße Anordnung der der Erfindung zugrundeliegenden Einrichtung gemäß Patentanspruch 3 dargestellt. Dabei ist die Funktionalität der erfindungsgemäßen Einrichtung 4 in die Basisstation B integriert.

In Fig. 5 ist am Beispiel GSM der Signalisierungsablauf beim Ablauf einer "Immediate Assignment Procedure" im Falle fehlender oder sehr niedriger Zeitverzögerung in der Verbindung zwischen Base Transceiver Station 2 und Base Station Controller 3 dargestellt. Das mobile Endgerät 1 beginnt die "Immediate Assignment Procedure" zum einem beliebigen Zeitpunkt T0 mit dem Aussenden einer CHAN_RQD(Ref1) Nachricht 5. Diese Nachricht enthält die Anfragereferenz Ref1. Der Base Station Controller 3 antwortet daraufhin mit dem Aussenden einer CHAN ACT Nachricht 6 an die Base Transceiver Station welche daraufhin mit einer CHAN ACT ACK Nachricht 7 antwortet. Der Base Station Controller 3 antwortet auf die CHAN ACT ACK Nachricht 7 mit dem Aussenden einer IMM ASSIGNMENT(Ref1) Nachricht 8. Diese Nachricht enthält die von der den Anmeldevorgang auslösenden CHAN_RQD(Ref1) Nachricht 5, eingebrachten Anfragereferenz Ref1. Da die IMM ASSIGNMENT(Ref1) Nachricht 8 in diesem Beispiel zur Laufzeit des Timers 3126 beim mobilen Endgerät 1 eintrifft wird sie vom mobilen Endgerät 1 als gültig anerkannt und das mobile Endgerät kann daraufhin den Signalisierungsvorgang fortsetzen.

In Fig. 6 ist am Beispiel GSM ein Signalisierungsablauf beim Ablauf einer "Immediate Assignment Procedure" dargestellt der durch Zeitverzögerung misslingt. Die Signalisierungsabläufe sind identisch zu den in Fig. 5 dargestellten, allerdings trifft die IMM ASSIGNMENT(Ref1) Nachricht 8 in diesem Beispiel nach Beendigung der Gültigkeitsphase beim mobilen Endgerät 1 ein. Die IMM ASSIGNMENT(Ref1) Nachricht 8 wird deshalb vom mobilen Endgerät 1 als ungültig verworfen und der Signalisierungsvorgang kann nicht fortgesetzt werden.

In Fig.7 ist am Beispiel GSM der Signalisierungsablauf beim Ablauf einer "Immediate Assignment Procedure" dargestellt. Es stellt in horizontaler Richtung die Netzelemente mobiles Endgerät 1, Base Transceiver Station 2, die erfindungsgemäße Einrichtung 4, und den Base Station Controller 3 dar. Die vertikale Richtung stellt die Zeitachse dar.
Das mobile Endgerät 1 beginnt die "Immediate Assignment Procedure" zum einem beliebigen Zeitpunkt T0 mit dem Aussenden einer CHAN_RQD(Ref1) Nachricht 5. Diese Nachricht enthält die Anfragereferenz Ref1. Aufgrund der Zeitverzögerung auf dem Übertragungssystem von der Base Transceiver Station 2 zum Base Station Controller 3 trifft die Nachricht zu einem von der Zeitverzögerung abhängigen Zeitpunkt Ta beim Base Station Controller 3 ein. Der Base Station Controller 3 antwortet daraufhin mit dem Aussenden einer CHAN ACT Nachricht 6, diese trifft nach einer von der Zeitverzögerung bestimmten Laufzeit bei der Base Transceiver Station 2 zum Zeitpunkt Tb ein und löst dort das Aussenden einer CHAN ACT ACK Nachricht 7 aus, welche zum von der Zeitverzögerung bestimmten Zeitpunkt Tc beim Base Station Controller 3 eintrifft. Der Base Station Controller 3 antwortet auf die CHAN ACT ACK Nachricht 7 mit dem Aussenden einer IMM ASSIGNMENT(Ref1) Nachricht 8. Diese Nachricht enthält die von der ursprünglich, den Anmeldevorgang auslösenden CHAN_RQD(Ref1) Nachricht 5, eingebrachten Anfragereferenz Ref1.
Zwischenzeitlich sendet das mobile Endgerät 1 nach Verstreichen der Zeitspanne S zum Zeitpunkt T1 eine weitere CHAN_RQD(Ref2) Nachricht 10, ebenso zum Zeitpunkt T2 (Nachricht 11) und zum Zeitpunkt T3, wobei jeweils die in der Nachricht enthaltenen Anfragereferenzen inkrementiert werden. Die zum Zeitpunkt T3 vom Mobilen Endgerät 1 ausgesandte CHAN_RQD(Ref4) Nachricht 12 enthält die Anfragereferenz Ref4.

Die erfindungsgemäße Einrichtung 4 speichert zu jedem Zeitpunkt, wenn sie von einer CHAN_RQD Nachricht durchlaufen wird, die darin enthaltene Anfragereferenz. Zum Zeitpunkt S1 speichert die Einrichtung 4 die in der CHAN_RQD(Ref1) Nachricht 5 enthaltene Anfragereferenz Ref1. Zum Zeitpunkt S2 speichert die Einrichtung 4 die in der CHAN_RQD(Ref2) 10 enthaltene Anfragereferenz Ref2, usw.

Zu dem Zeitpunkt, in welchem die IMM ASSIGNMENT(Ref1) Nachricht 8 bei der erfindungsgemäßen Einrichtung 4 eintrifft, ist in der erfindungsgemäßen Einrichtung die Anfragereferenz Ref3 gespeichert. Erfindungsgemäß ersetzt die Einrichtung 4 in der IMM ASSIGNMENT(Ref1) Nachricht 8 enthaltene Anfragereferenz Ref1 mit der zu diesem Zeitpunkt gespeicherten Anfragereferenz Ref3 und sendet die IMM ASSIGNMENT(Ref3) Nachricht 9 an das mobile Endgerät 1 weiter. Die IMM ASSIGNMENT(Ref3) Nachricht 9 trifft zum Zeitpunkt T4 beim mobilen Endgerät 1 ein. Zu diesem Zeitpunkt ist in diesem Beispiel bereits mehr als der 3fache Zeitraum S verstrichen, das mobile Endgerät 1 würde demnach eine Anfragereferenz Ref1 nicht als gültig anerkennen. Durch die erfindungsgemäße Einrichtung 4 erfährt das mobile Endgerät 1 eine Antwort vom Mobilfunknetz die als gültig anerkannt wird, da gemäß dem GSM Standard mobile Endgeräte nur IMM ASSIGNMENT Nachrichten als gültig anerkennen die eine der 3 letzten vom mobilen Endgerät 1 ausgesandten Anfragereferenzen enthalten. Im gegenständlichen Fall sind dies die Referenzen Ref2, Ref3 und Ref4. Eine IMM ASSIGNMENT, welche Ref1 beinhaltet würde vom mobilen Endgerät 1 demnach verworfen werden.

### Liste der Bezeichnungen

- B: Basisstation
- S: Steuerungseinheit
- V: Vermittlungseinheit
- 1: Mobiles Endgerät (Mobile Station, MS)
- 2: Base Transceiver Station (GSM Basisstation)
- 3: Base Station Controller (GSM Steuerungseinheit)
- 4: Erfindungsgemäße Einrichtung
- 5: Anmeldenachricht CHAN_RQD(Ref1)
- 6: CHAN ACT Nachricht
- 7: CHAN ACT ACK Nachricht
- 8: IMM ASSIGNMENT(Ref1) Nachricht
- 9: IMM ASSIGNMENT(Ref3) Nachricht
- 10: CHAN_RQD(Ref2) Nachricht
- 11: CHAN_RQD(Ref3) Nachricht
- 12: CHAN_RQD(Ref4) Nachricht
- 13: Übertragungskanal mit Zeitverzögerung

## Patentansprüche

1. Verfahren zur Ausführung einer Anmeldeprozedur eines mobilen Endgerätes (1) in ein Mobilfunknetz **dadurch gekennzeichnet, dass** zur Kompensierung einer Zeitverzögerung auf dem Kommunikationskanal zwischen einer Basisstation (B) und einer Steuerungseinheit (S) eine Einrichtung (4) in die Verbindung zwischen der Basisstation (B) und der
Steuerungseinheit (S) eingefügt ist, welche
- zwischen der Basisstation (B) und dem
zeitverzögerungsbehafteten Abschnitt (13) im Kommunikationskanal angeordnet ist und
- die vom mobilen Endgerät (1) während jeder
Initiierung einer Anmeldeprozedur ausgesendete Anfragereferenz speichert und
- diese gespeicherte Anfragereferenz in eine von der Steuerungseinheit (S) gesendete Antwortnachricht derart einfügt, dass die darin enthaltene Anfragereferenz durch die aktuell in dieser Einrichtung gespeicherte Anftagereferenz ersetzt wird.

2. Verfahren nach Anspruch 1, **dadurch gekennzeichnet, dass** diese Einrichtung in einem eigenständigen Netzelement (4) angeordnet ist.

3. Verfahren nach Anspruch 1, **dadurch gekennzeichnet, dass** diese Einrichtung in der Basisstation (B) angeordnet ist.

4. Verfahren nach einem der Ansprüche 1 bis 3, **dadurch gekennzeichnet dass** als-Mobilfunknetz ein Mobilfunknetz nach dem GSM Standard vorgesehen ist.

5. Verfahren nach Anspruch 4, **dadurch gekennzeichnet, dass** als Anmeldeprozedur eine "Immediate Assignment Procedure",
dass als die vom mobilen Endgerät ausgesendete Nachricht eine CHAN RQD Nachricht, und dass als Antwortnachricht eine IMM ASSIGNMENT Nachricht verwendet wird.

6. Verfahren nach einem der Ansprüche 1 bis 3, **dadurch gekennzeichnet dass** diese Einrichtung in einem Flugzeug angeordnet ist

7. Verfahren nach einem der Ansprüche 1 bis 3, **dadurch gekennzeichnet dass** diese Einrichtung in einem Schiff angeordnet ist.

8. Mobilfunksystem, welches zur Durchführung eines Verfahrens nach einem der Ansprüche 1 - 7 eingerichtet ist, **dadurch gekennzeichnet dass** eine Einrichtung in die Verbindung zwischen der Basisstation (2) und der Steuerungseinheit (3) eine Einrichtung (4) eingefügt ist, welche Mechanismen umfasst welche
- die vom mobilen Endgerät (1) während jeder
Initiierung einer Anmeldeprozedur ausgesendete Anfragereferenz speichern und
- diese gespeicherte Anfragereferenz in eine von der Steuerungseinheit (3) gesendete Antwortnachricht derart einfügen, dass die darin enthaltene Anfragereferenz durch die aktuell in dieser Einrichtung gespeicherte Anfragereferenz ersetzt werden.

9. Einrichtung zum Einsatz in einem Mobilfunksystem gemäβ den Merkmalen des Anspruchs 8, welche Mechanismen umfasst welche
- die vom mobilen Endgerät (1) während jeder Initiierung einer Anmeldeprozedur ausgesendete Anfragereferenz speichern und
- diese gespeicherte Anfrägereferenz in eine von der Steuerungseinheit (3) gesendete Antwortnachricht derart einfügen, dass die darin enthaltene Anfragereferenz durch die aktuell in dieser Einrichtung gespeicherte Anfragereferenz ersetzt werden.

## Claims

1. Method for performing a registration procedure of a mobile terminal device (1) in a mobile communications network, **characterised in that** in order to compensate for a time delay on the communication channel between a base station (B) and a control unit (S) a device (4) is inserted into the connection between the base station (B) and the control unit (S), which device
- is disposed in the communication channel between the base station (B) and the section (13) that is subject to a time delay and
- stores the request reference transmitted by the mobile terminal device (1) during each initiation of a registration procedure and
- inserts said stored request reference into a reply message sent by the control unit (S) in such a way that the request reference contained therein is replaced by the request reference currently stored in said device.

2. Method according to claim 1, **characterised in that** said device is disposed in a self-contained network element (4).

3. Method according to claim 1, **characterised in that** said device is disposed in the base station (B).

4. Method according to one of claims 1 to 3, **characterised in that** a mobile communications network conforming to the GSM standard is provided as the mobile communications network.

5. Method according to claim 4, **characterised in that** an "immediate assignment procedure" is used as the registration procedure, **in that** a CHAN RQD message is used as the message transmitted by the mobile terminal device, and **in that** an IMM ASSIGNMENT message is used as the reply message.

6. Method according to one of claims 1 to 3, **characterised in that** said device is disposed in an aircraft.

7. Method according to one of claims 1 to 3, **characterised in that** said device is disposed in a ship.

8. Mobile communications system which is configured for performing a method according to one of claims 1 - 7, **characterised in that** a device is inserted into the connection between the base station (2) and the control unit (3), which device comprises mechanisms which
- store the request reference transmitted by the mobile terminal device (1) during each initiation of a registration procedure and
- insert said stored request reference into a reply message sent by the control unit (3) in such a way that the request reference contained therein is replaced by the request reference currently stored in said device.

9. Device for use in a mobile communications system according to the features of claim 8, which device comprises mechanisms which
- store the request reference transmitted by the mobile terminal device (1) during each initiation of a registration procedure and
- insert said stored request reference into a reply message sent by the control unit (3) in such a way that the request reference contained therein is replaced by the request reference currently stored in said device.

## Revendications

1. Procédé pour exécuter une procédure de connexion d'un terminal mobile (1) à un réseau de téléphonie mobile, **caractérisé en ce que**, pour compenser un retard de temps sur le canal de communication entre une station de base (B) et une unité de commande (S), un dispositif (4) est inséré dans la liaison entre la station de base (B) et l'unité de commande (S), lequel :
- est situé dans le canal de communication entre la station de base (B) et la partie (13) présentant un retard de temps,
- met en mémoire la référence de requête émise par le terminal mobile (1) pendant chaque initialisation d'une procédure de connexion et
- insère cette référence de requête mise en mémoire de manière telle dans un message de réponse émis par l'unité de commande (S) que la référence de requête contenue dans ce message est remplacée par la référence de requête actuellement stockée dans ce dispositif.

2. Procédé selon la revendication 1, **caractérisé en ce que** ce dispositif est situé dans un élément de réseau autonome (4).

3. Procédé selon la revendication 1, **caractérisé en ce que** ce dispositif est situé dans la station de base (B).

4. Procédé selon l'une des revendications 1 à 3, **caractérisé en ce qu'**est prévu, en tant que réseau de téléphonie mobile, un réseau de téléphonie mobile selon la norme GSM.

5. Procédé selon la revendication 4, **caractérisé par** l'utilisation d'une « Immediate Assignment Procedure » en tant que procédure de connexion, d'un message CHAN RQD en tant que message émis par le terminal mobile et d'un message IMM ASSIGNMENT en tant que message de réponse.

6. Procédé selon l'une des revendications 1 à 3, **caractérisé en ce que** ce dispositif est situé dans un aéronef.

7. Procédé selon l'une des revendications 1 à 3, **caractérisé en ce que** ce dispositif est situé dans un bateau.

8. Système de téléphonie mobile aménagé pour exécuter un procédé selon l'une des revendications 1 à 7, **caractérisé en ce qu'**est inséré dans la liaison entre la station de base (2) et l'unité de commande (3) un dispositif comprenant des mécanismes qui :
- mettent en mémoire la référence de requête émise par le terminal mobile (1) pendant chaque initialisation d'une procédure de connexion et
- insèrent cette référence de requête mise en mémoire de manière telle dans un message de réponse émis par l'unité de commande (3) que la référence de requête contenue dans ce message est remplacée par la référence de requête actuellement stockée dans ce dispositif.

9. Dispositif destiné à être utilisé dans un système de téléphonie mobile selon les caractéristiques de la revendication 8, lequel dispositif comprend des mécanismes qui :
- mettent en mémoire la référence de requête émise par le terminal mobile (1) pendant chaque initialisation d'une procédure de connexion et
- insèrent cette référence de requête mise en mémoire de manière telle dans un message de réponse émis par l'unité de commande (3) que la référence de requête contenue dans ce message est remplacée par la référence de requête actuellement stockée dans ce dispositif.
